Europäisches Patentamt

European Patent Office

Office européen des brevets

(11) Publication number: **0 166 393**
**A2**

(12) **EUROPEAN PATENT APPLICATION**

(21) Application number: **85107691.9**

(22) Date of filing: **21.06.85**

(51) Int. Cl.⁴: **H 04 M 1/27,** H 04 M 1/64, H 04 M 3/50

(30) Priority: **25.06.84 US 624436**

(43) Date of publication of application: **02.01.86 Bulletin 86/1**

(84) Designated Contracting States: **CH DE FR GB IT LI SE**

(71) Applicant: **HONEYWELL INC., Honeywell Plaza, Minneapolis Minnesota 55408 (US)**

(72) Inventor: **Atherton, Larry S., 1519 - 144th Avenue N.E., Anoka Minnesota 55303 (US)**
Inventor: **Schnell, R.J., 6725 Bryant Ave. No., Brooklyn Center Minnesota 55430 (US)**
Inventor: **Olson, Thomas J., 6805 Vincent Avenue South, Richfield Minnesota 55423 (US)**

(74) Representative: **Rentzsch, Heinz et al, Honeywell Europe S.A. Holding KG Patent- und Lizenzabteilung Kaiserleistrasse 55, D-6050 Offenbach am Main (DE)**

(54) **Telephone interface system.**

(57) A computer-controlled telephone interface system is disclosed which includes telephone line interface (21) connected to one or more telephone lines for receiving and transmitting audio communications including voice communication on the phone lines, an audio interface (23) for receiving and recognizing incoming spoken audio communications and transmitting synthesized speech or recorded speech for outgoing audio communications and including recording means for recording incoming and outgoing audio communications. The system further includes a phone line balance network (22) connected between said audio interface (23) and said telephone line interface (21) which allows simultaneous reception of incoming and transmission of outgoing communications. A telephone dialer (20) for dialing outgoing calls and a telephone line monitor (24) for detecting dial tone, ring, and busy signals associated with outgoing dialed calls may also be provided. A central processing unit CPU (11) for receiving, processing and transmitting data controls each of the functions of the telephone interface system.

HONEYWELL INC.

Honeywell Plaza

Minneapolis, Minn. USA

June 20, 1985

T1009657 EP

HR/ep

TELEPHONE INTERFACE SYSTEM

The present invention relates generally to the field of automated telephone interface devices and, more particularly, to a computer controlled telephone voice interface which allows for voice input and output under central processing unit (CPU) control.

In the prior art systems have been devised that accomplish automatic telephone answering and auto dialing. There are also systems of that type which allow a computer to send and receive digital data over the telephone lines. However, such systems do not also allow for direct voice input and output under the control of the CPU. It is an object of the present invention to provide a more versatile interface system which permits voice transmission and data transmission by audio frequency communication. This and other objects are achieved by the invention as characterized in claim 1.

There is provided a computer controlled telephone voice interface which combines into a single unit the ability of a CPU to auto answer, auto dial, monitor the line for dead, ringing, busy, dial tone and have the voice signal from and to the telephone directly interfaced to and from peripheral audio devices such as recording devices or speech synthesis devices. The system basically includes a telephone dialer subsystem which may operate on automatic or manual input, a telephone line interface system which interfaces incoming and outgoing calls with the phone line, a phone line balance network which allows incoming speech to be recognized at the same time speech is being put out on the phone line, audio interface and line monitor subsystems. The system of the invention provides the interface necessary between the voice input to and the voice output from a standard telephone line to peripheral audio equipment and output devices under the complete control of a CPU. Further improvements are described in the subclaims. A preferred embodiment of the invention will now be described with reference to the attached drawings, in which

FIGURE 1 is a schematic block diagram showing the telephone interface system of the invention as part of a complete system;

FIGURE 2 is a basic schematic block diagram of the telephone interface system of the invention;

FIGURES 3A and 3B taken together represent a schematic circuit diagram of one embodiment of the telephone interface system of the invention.

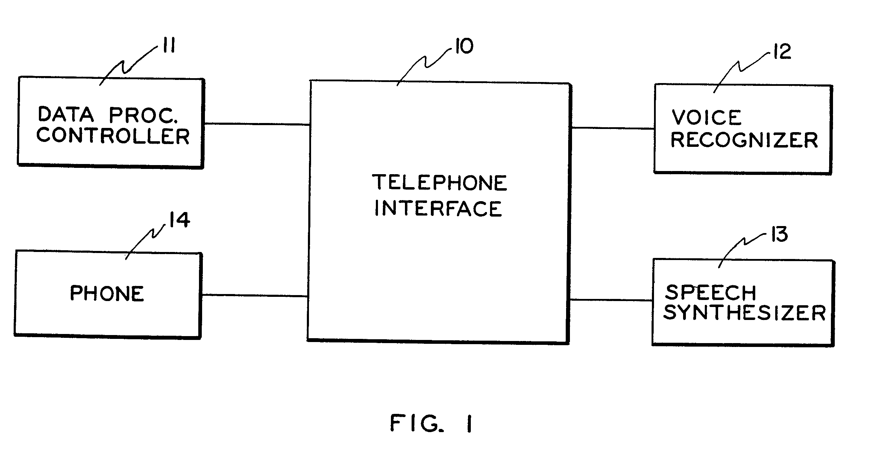

In FIGURE 1, the telephone interface system of the invention is shown in block form at 10 connected to a data processing controller 11, which may be any compatible computer system or central processing unit (CPU) for use with the system. The telephone interface may also be connected to other peripherals such as a voice recognizer 12, a speech synthesizer 13 and, of course, one or more phones 14.

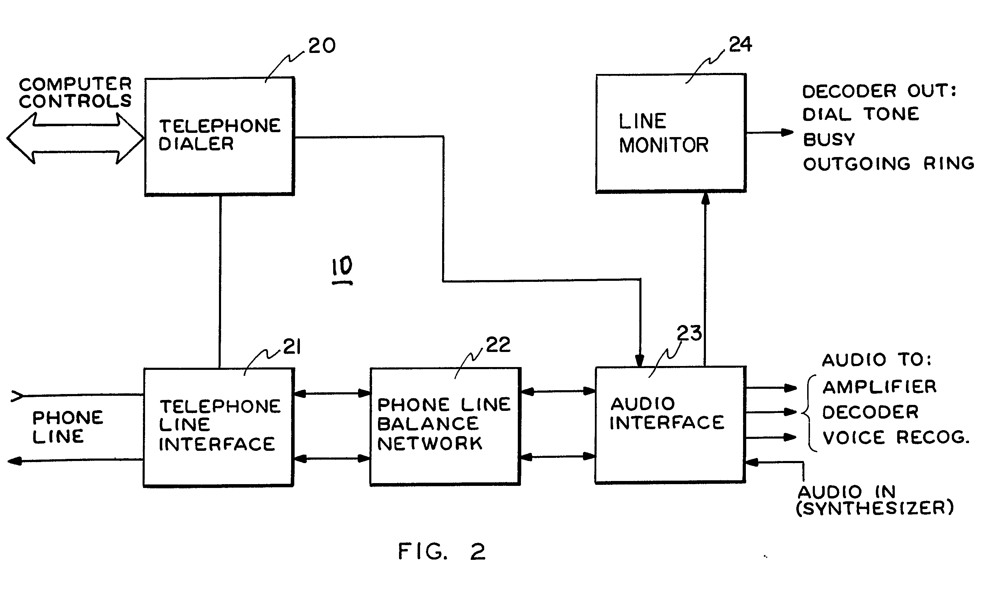

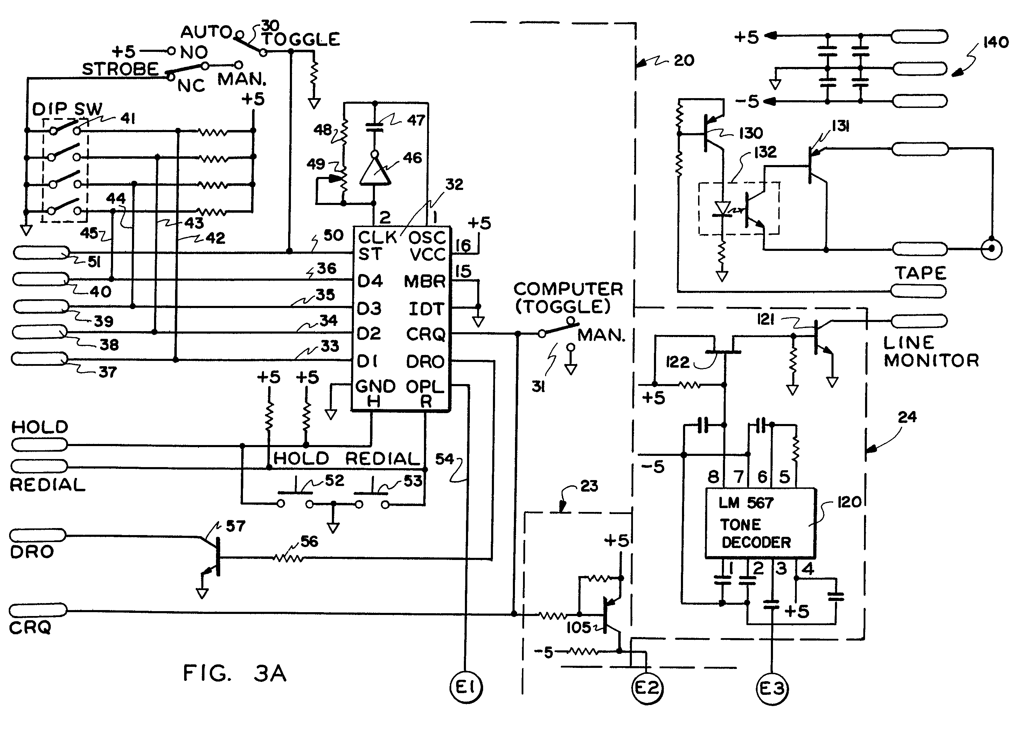

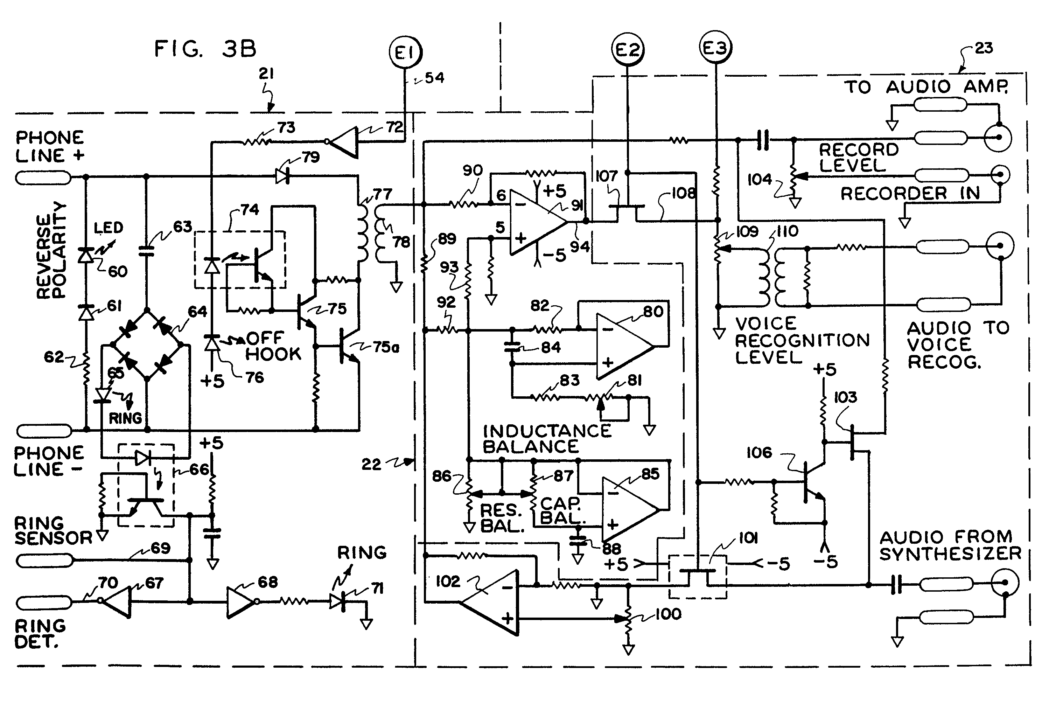

FIGURE 2 depicts a block diagram of the basic subsystems found in the telephone interface system 10. These include a telephone dialer system 20, telephone line interface system 21, phone line balance network 22, audio interface 23 and a line monitor 24. These subsystems are discussed in greater detail with regard to FIGURES 3A and 3B and are each outlined in dash lines as portions of that combined figure.

The basic outgoing portion of the system which controls communications which are initiated by the system and are to be put out onto the telephone lines is controlled by the telephone dialer system 20 which indirectly interfaces with the compatible computing system 11. It also interfaces with the audio interface 23 and the telephone line interface 21 in a manner to be described. The telephone line interface subsystem controls all incoming and outgoing signals which are applied and received from the phone line. This system also communicates with the audio interface through the phone line balance network 22.

The telephone dialer system is shown in detail at 20 in FIGURE 3A. As can be seen from that drawing, the system is capable of either manual or automatic operation and manual or automatic dialing is controlled by the toggle switches 30 and 31.

The main components of the Dialer subsystem 20 include a binary to phone pulse converter integrated circuit (IC) 32 which may be an MC14409 IC which receives binary dialing input information at connections D1 through D4 via input lines 33, 34, 35 and 36 respectively. In the automatic mode of operation dialing information is transmitted from the data processing controller 11 via connections 37, 38, 39 and 40 and in the manual mode from the dip switches shown at 41 via lines 42-45. A dialer clock including inverter 46, capacitor 47, resistor 48 and potentiometer 49 controls the outpulsing rate of the dialing digit information based on pulse on line 50 which, in turn may be received from the data processing controller 11 via 51 in the automatic mode or from the toggle switch 30 in the manual mode. Hold and redial switches are provided at 52 and 53 and are used in conjunction with information received via the hold and redial connections. Connection to the phone output of the telephone line interface is via phone output line (OPL) 54. The Dialing Rotating Output (DRO) output on line 55 including resistor 56 and transistor 57 function to indicate that a digit is being dialed.

The telephone line interface subsystem 21 is shown in greater detail in FIGURE 3B. A light emitting diode (LED) 60 together with diode 61 and resistor 62 are connected across the phone lines close to the phone line connection. The LED functions to indicate reverse polarity connections to the phone line. Incoming ring signals are detected via a circuit which includes capacitor 63, bridge circuit 64, LED 65. The detected signals are transmitted via an optoisolator 66 together with inverters 67 and 68. Signals are transmitted to the data processing controller 11 via lines 69 and 70 and visual ring indication is provided by LED 71.

The off-hook/on-hook status of the phone is controlled by signals on output line 54 from IC 32 of FIGURE 3A which are received through inverter 72 and resistor 73. The system further includes an optoisolator 74, transistors 75 and 75a, off-hook indicating LED 76, and a main transformer having primary 77 and secondary 78 along with diode 79.

The phone line balance network 22 is also depicted in greater detail in FIGURE 3B. This system applies outgoing audio signals to the phone line and, at the same time, allows incoming audio to pass basically unaffected. The system includes an inductance balance system with operational amplifier 80, balance potentiometer 81 and associated resistors 82 and 83 with capacitor 84. Likewise, resistance and capacitance balance networks are provided including operational amplifier 85 potentio- meters 86 and 87 and capacitor 88.

Outgoing audio is coupled to the phone line through transformer secondary 78 via resistor 89. The best audio output is achieved when the inductance, capacitance and resistance of the balance networks balance those of the phone line. Audio to the phone line is also fed through resistor 90 to the pin 6 input of operational amplifier 91, and a further audio signal goes through resistor 92 to the inductance, resistance and capacitance balance networks then through resistor 93 to pin 5 of the operational amplifier 91. The inductance, resistance and capacitance of the phone line, of course, is coupled across the transformer and thereby affects the negative input signal at pin 6 of the operational amplifier 91. The potentiometers 81, 86 and 87 are adjusted to values matching those of the phone line. At the point of best balance the output of the operational amplifier 91 is a minimum at 94 compared to the output to the phone line.

Parts of the audio interface circuit 23 are shown in both FIGURES 3A and 3B. This subsystem controls the coupling of voice audio to and from the phone line. It includes an audio output from a voice synthesizer, for example, which is coupled through a volume control potentiometer 100 via field effect transistor (FET) 101 to an operational amplifier 102. The synthesized audio also may be conducted to a recorder input via FET 103 and record volume level potentiometer 104. The FETs 101 and 103 are turned on by gate connected signals from the CRQ output of the IC 32 (FIGURE 3A) which turns on transistors 105 (FIGURE 3A) and 106 (FIGURE 3B) in a well-known manner.

Incoming audio from the phone line proceeds through operational amplifier 91 and FET 107, which is also turned on by transistor 105, via conductor 108 to a level control potentiometer 109 and isolation transformer 110 to a voice recognition system. The incoming audio is also applied to the recording system so that both sides of the conversation can be recorded.

A line monitor subsystem 24 is provided to detect dial tone, busy and outgoing ring signals on the phone line. The line monitor subsystem is depicted in FIGURE 3A. That circuitry includes a tone decoder IC which is connected to a line monitor through transistor 121 and FET 122. The tone decoder is set to detect signals from about 400 to 600 Hz and interface with the data process controller or CPU 11 (FIGURE 1). Signal inputs are received via E3.

A tape recorder control is also shown in FIGURE 3A which includes transistors 130 and 131 coupled by optoisolator 132. A typical DC power supply filter for the system is illustrated at 140.

In operation for outgoing calls, the binary to phone pulse converter IC 32 is used for dialing outgoing calls. In either the manual or automatic operative mode a low on the CRQ line causes the phone to be taken off the hook via the output line 54. A "high" on the line 54 turns on the optoisolator 74 (FIGURE 3B) and the transistors 75 and 75a connecting the audio to the phone via the transformer 77, 78. Output pulsing is controlled from the ST contact of the IC 32 on line 50. This is in the form of pulses on the output line 54 which connect and disconnect the phone line thereby providing dial pulses. Output pulsing for each digit being dialed is controlled by the HOLD signal (H) of the IC 32. A "low" on the HOLD line halts outpulsing at the end of each sequential digit being dialed. When the line goes "high" the next digit is outpulsed. If necessary, redialing of the number is controlled by the redial line. Of course, at the same time the audio is coupled across the transformer 77, 78 it is coupled to the recording system as controlled by the CRQ signal. The line monitor subsystem detects the dial tone, busy and outgoing ring signals on the phone. The data processing controller or CPU 11 discriminates between these signals based on the duration of the signal.

In the case of incoming calls, the ring detection and transmission system of the telephone interface subsystem detect the ring and provide input information to the data processing controller or CPU 11. The data processing controller, in turn, via line 54 causes the phone to be taken off-hook and the audio to be coupled across the transformer 77, 78. This again activates the audio systems including the input/output and recording functions. Of course in the case of either incoming or outgoing connections, the speech synthesizer may be applied as desired.

Claims:

1. A telephone interface system, c h a r a c t e r i z e d
   b y

   a) telephone line interface means (21) connected to one or
      more telephone lines for receiving and transmitting
      audio communications including voice communication on
      phone lines;

   b) audio interface means (23) for receiving and recognizing incoming audio communications and providing outgoing audio communications;

   c) phone line balance network means (22) connected between
      said audio interface means (23) and said telephone line
      interface means (21) for allowing simultaneous reception of incoming and transmission of outgoing audio
      communications;

   d) a central processing unit (CPU) (32) for receiving,
      processing and transmitting data to control the
      functions of the telephone interface system.

2. A system according to claim 1, c h a r a c t e r i z e d
   b y   telephone dialer means (20) for dialing outgoing
   calls.

3. A system according to claim 1 or 2, c h a r a c t e r -
   i z e d   b y   telephone line monitor means (24) for
   detecting dial tone, ring, and busy signals associated
   with outgoing dialed calls.

4. A system according to claim 3, c h a r a c t e r i z e d
   i n   t h a t   the telephone line monitor means (24)
   includes tone decoder means (120) for recognizing dial
   tone, busy and ring signals for dialed outgoing calls
   and which, with said CPU (32), discriminates therebetween
   to control outgoing call functions.

5. A system according to one of the preceding claims,
   c h a r a c t e r i z e d   i n   t h a t   said phone
   line balance network (22) comprises means (80-88) for
   balancing the inductance, capacitance and resistance of the outgoing audio communication with that of the phone line.

6. A system according to one of the preceding claims, c h a r a c t e r i z e d   i n   t h a t   said telephone balance network (22) comprises discrimination means for discriminating between said incoming and outgoing audio communications such that only said incoming audio communications are passed to said audio interface means (23) and only said outgoing audio communications are transmitted to said phone line.

7. A system according to one of the preceding claims, c h a r a c t e r i z e d   b y   one or more peripheral devices connected to said audio interface means (23) to provide outgoing audio communications and process incoming audio communications.

8. A system according to claim 7,   c h a r a c t e r i z e d i n   t h a t   said peripheral devices for incoming audio communications comprise voice recognition means (12) for recognizing incoming speech and recording means for recording and wherein said peripheral devices for outgoing audio communication further comprise means for connecting recorded audio communications or audio communications from speech synthesizer means (13).

9. A system according to one of the preceding claims, c h a r a c t e r i z e d   i n   t h a t
   e) the telephone line interface means (21) is connected between the telephone lines and the audio interface means and simultaneously has an input (E1) connected to the telephone dialer means (20);
   f) a second output (E2) of the telephone dialer means (20) is connected to the audio interface means (23);
   g) the phone line balance network (22) is interconnected between the telephone line interface means (21) and the audio interface means (23);

**0 166 393**

h) the line monitor means (24) is connected to the audio
   interface means (23).

FIG. 1

DATA PROC. CONTROLLER — 11

TELEPHONE INTERFACE — 10

VOICE RECOGNIZER — 12

PHONE — 14

SPEECH SYNTHESIZER — 13

1/4

0 166 393

FIG. 2

FIG. 3A

FIG. 3B

0 166 393

4/4